(19) Europäisches Patentamt / European Patent Office / Office européen des brevets

(11) **EP 3 324 324 B1**

(12) **FASCICULE DE BREVET EUROPEEN**

(45) Date de publication et mention
de la délivrance du brevet:
**11.03.2020  Bulletin 2020/11**

(51) Int Cl.:
***G06F 21/53*** (2013.01)

(21) Numéro de dépôt: **17202682.5**

(22) Date de dépôt: **21.11.2017**

(54) **PROCÉDÉ DE PROTECTION D'UN DISPOSITIF ÉLECTRONIQUE EXÉCUTANT UN PROGRAMME CONTRE DES ATTAQUES PAR INJECTION DE FAUTE ET PAR CONFUSION DE TYPE**

SCHUTZVERFAHREN EINER ELEKTRONISCHEN VORRICHTUNG, DIE EIN PROGRAMM GEGEN ANGRIFFE DURCH FEHLER-INJEKTION ODER TYPENVERWIRRUNG AUSFÜHRT

METHOD FOR PROTECTING AN ELECTRONIC DEVICE RUNNING A PROGRAM AGAINST FAULT-INJECTION AND TYPE-CONFUSION ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2016  FR 1661310**

(43) Date de publication de la demande:
**23.05.2018  Bulletin 2018/21**

(73) Titulaire: **Idemia Identity & Security France
92400 Courbevoie (FR)**

(72) Inventeurs:
• **BAILLY, Alexis
92445 Issy-Les-Moulineaux (FR)**
• **MAGHREBI, Houssem
92445 Issy-Les-Moulineaux (FR)**
• **SERRE, Ahmadou
92445 Issy-Les-Moulineaux (FR)**
• **BRUGNON, Marc
92445 Issy-Les-Moulineaux (FR)**

(74) Mandataire: **Regimbeau
20, rue de Chazelles
75847 Paris Cedex 17 (FR)**

(56) Documents cités:
**EP-A1- 1 960 934     FR-A1- 3 006 471
FR-A1- 3 010 814**

• **Guillaume Barbu ET AL: "New Countermeasures against Fault and Software Type Confusion Attacks on Java Cards" In: "Network and Parallel Computing", 30 juin 2014 (2014-06-30), Springer International Publishing, Cham 032548, XP055253826, ISSN: 0302-9743 ISBN: 978-3-540-76785-5 vol. 8501, pages 57-75, DOI: 10.1007/978-3-662-43826-8_5, * alinéa [04.2] ***

## Description

## DOMAINE DE L'INVENTION

La présente invention concerne un procédé de protection d'un dispositif électronique exécutant un programme contre des attaques par injection de faute et par confusion de type mises en œuvre sur une variable destinée à être utilisée par le programme.

## ETAT DE LA TECHNIQUE

De façon connue, une attaque par injection de faute consiste à perturber l'environnement physique d'un dispositif électronique qui exécute un programme, de sorte à modifier la valeur mémorisée par le dispositif d'une variable destinée à être utilisée par le programme. De telles perturbations peuvent être produites de différentes manières: variation d'une tension d'alimentation, variation d'une fréquence d'horloge du dispositif, émission de rayonnement électromagnétique ou laser, etc.

Pour protéger une variable contre une attaque par injection de faute, plusieurs types de contremesures existent.

Une première contremesure pour protéger une variable contre une attaque par injection de faute consiste à simplement dupliquer le contenu de la pile d'exécution dans une pile de sauvegarde. Pour vérifier l'intégrité d'une variable, on compare la valeur de la variable mémorisée dans la pile d'exécution et la valeur de sa copie dans la pile de sauvegarde. Si les deux valeurs comparées sont différentes, une faute est détectée.

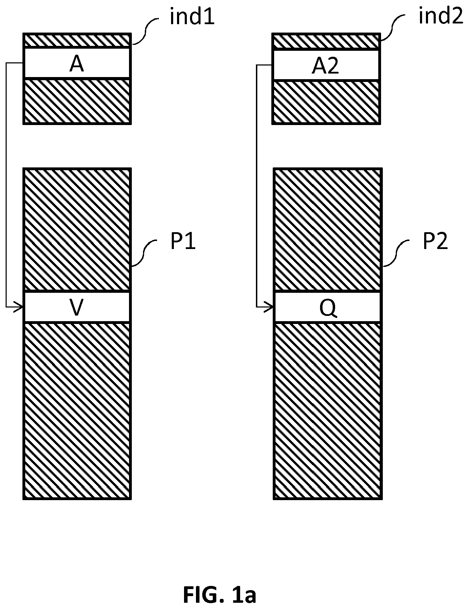

Une deuxième contremesure, décrite dans le document EP1960934B1, consiste à calculer une donnée de contrôle d'intégrité Q sur la variable et mémoriser cette donnée de contrôle d'intégrité dans une pile de contrôle dédiée. Pour appliquer ce principe de protection, deux piles indépendantes sont allouées dans la mémoire du dispositif, comme cela est représenté en **figure 1a** :

- une pile d'exécution P1 contenant la valeur de chaque variable destinée à être utilisée par le programme, et
- une pile de contrôle P2 contenant les données de contrôle d'intégrité Q sur chaque variable.

Sont également prévus deux registres d'index :

- un premier registre d'index ind1 contenant des données d'adressage adaptées pour localiser les variables contenues dans la pile d'exécution P1, et
- un deuxième registre d'index ind2 contenant des données d'adressage adaptées pour localiser les données de contrôle d'intégrité contenues dans la pile de contrôle P2.

Pour vérifier l'intégrité d'une variable, on lit la valeur courante de cette variable présente dans la pile d'exécution (cette valeur étant localisée grâce à une donnée d'adressage associée à la variable, présente dans le premier registre d'index ind1), on met en œuvre un calcul d'intégrité sur la base de la valeur lue et on compare le résultat de ce calcul à la donnée d'intégrité associée à la variable qui est présente dans la pile de contrôle (la donnée d'intégrité étant localisée grâce à une donnée d'adressage correspondante dans le deuxième registre d'index ind2). Si les deux valeurs comparées sont différentes, une faute est détectée.

Cependant, la solution présentée dans le document EP1960934B1 ne permet pas de protéger une variable contre une attaque dite par « confusion de type », par exemple mise en œuvre pour attaquer un programme JavaCard exécuté par une machine virtuelle. Une attaque par confusion de type consiste à forcer une référence d'un type donné vers un objet de type différent ensuite à accéder à un objet au travers d'une référence de type invalide afin de réaliser des opérations interdites par la machine virtuelle, par exemple accéder à la mémoire au-delà des bornes de l'objet.

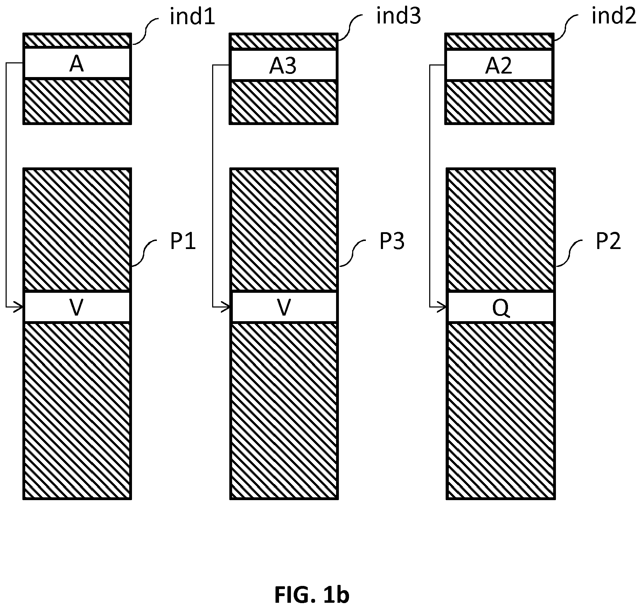

Ainsi, pour protéger des variables contre des attaques par injection de faute et également par confusion de type, il pourrait être envisagé d'utiliser, conformément à la **figure 1b** :

- trois piles différentes : la pile d'exécution P1 pour mémoriser la valeur V d'une variable, et une pile de contrôle P2 pour mémoriser une donnée de contrôle d'intégrité Q représentative du type de la variable, et une pile de sauvegarde P3 pour mémoriser une copie de la valeur V;
- trois registres d'index différents: ind1, ind2 et ind3 contenant des données d'adressage A, A2, A3 pour localiser les données respectivement contenues dans les trois piles P1, P2 et P3.

Dans ce cadre, un attaquant devrait modifier la valeur V dans la pile P1, la copie de cette valeur dans la pile P3, et la donnée Q dans la pile P2 de façon cohérente afin de réussir son attaque. Or, la probabilité de déclencher de telles modifications cohérentes est faible. La cohérence des informations contenues dans les trois piles P1, P2, P3 offre donc un haut niveau de protection de la variable.

Toutefois, une telle solution aurait pour inconvénient d'être consommatrice en mémoire. En particulier, un dispositif électronique tel qu'une carte à puce, le nombre de registres d'index utilisables simultanément peut être fortement limité (par exemple seulement 8 registres d'index), et ces registres d'index peuvent s'avérer être déjà utilisés à d'autres fins par un tel dispositif; la solution envisagée sur la figure 1b peut alors s'avérer tout simplement non possible.

## EXPOSE DE L'INVENTION

Un but de l'invention est de protéger une variable mémorisée dans une pile d'exécution contre des attaques par injection de faute et par confusion de type moyennant une consommation de mémoire supplémentaire réduite.

Il est dès lors proposé, selon un premier aspect de l'invention, un procédé de protection d'un dispositif électronique exécutant un programme contre des attaques par injection de faute et par confusion de type susceptibles d'affecter une variable destinée à être utilisée par le programme, le procédé comprenant des étapes de :

- calcul de données de contrôle d'intégrité de la variable, les données de contrôle d'intégrité dépendant:

  ○ d'un type de la variable, et
  ○ d'une valeur de la variable mémorisée dans une pile d'exécution et/ou d'une première donnée d'adressage mémorisée dans un premier registre d'index, la première donnée d'adressage étant adaptée pour localiser la valeur mémorisée dans la pile d'exécution,

- mémorisation des données de contrôle d'intégrité sur la variable dans au moins une pile de contrôle différente de la pile d'exécution,
- mémorisation, dans un deuxième registre d'index, d'une unique deuxième donnée d'adressage adaptée pour localiser les données de contrôle d'intégrité dans la ou chaque pile de contrôle,
- vérification d'intégrité de la variable mise en oeuvre lorsqu'un programme commande une lecture de la donnée d'adressage de la variable et/ou une lecture de la valeur de la variable, ladite vérification comprenant une comparaison entre les données de contrôle d'intégrité mémorisées dans la ou chaque pile de contrôle et de nouvelles données de contrôle d'intégrité calculées sur la base:

  d'un type de la variable vu par le programme lors de la commande de lecture, et/ou de la valeur de la variable présente dans la pile d'exécution et
  de la donnée d'adressage présente dans le premier registre d'index lors de la commande de lecture.

Le fait que les données de contrôle d'intégrité mémorisées dépendent non seulement de la valeur de la variable et/ou de la première donnée d'adressage, mais également du type de la variable permet de protéger la variable contre des attaques par injection de faute mais également contre des attaques par confusion de type.

En outre, une économie de consommation mémoire supplémentaire pour assurer cette double protection est offerte par le procédé proposé, cette économie étant de nature différente selon le nombre de piles de contrôle utilisées :

- Dans le cas où les données de contrôles d'intégrité sont mémorisées dans une seule et même pile de contrôle, cette économie réside dans l'unicité même de cette pile de contrôle venant en supplément de la pile d'exécution.
- Dans le cas où les données de contrôles d'intégrité sont mémorisées dans plusieurs piles de contrôles, une économie de nombre de registre d'index est obtenue. En effet, dans la mesure où une seule donnée d'adressage sert à localiser les données de contrôle dans les différentes piles de contrôles utilisées, seul un registre d'index supplémentaire est nécessaire.

Le procédé selon ce premier aspect de l'invention peut en outre comprendre les caractéristiques suivantes, prises seules ou en combinaison lorsque cela est techniquement possible.

Les données de contrôle d'intégrité calculées peuvent dépendre de, ou comprendre :

- une première donnée de contrôle d'intégrité dépendant du type de la variable,
- une deuxième donnée de contrôle d'intégrité dépendant de la valeur de la variable et/ou de la première donnée d'adressage.

La première donnée de contrôle d'intégrité peut être calculée par application d'une première fonction prédéterminée à la valeur de la variable et à la donnée d'adressage.

L'application de la première fonction prédéterminée comprend le calcul d'un code de contrôle d'erreur à une donnée dépendant de la valeur de la variable et/ou de la donnée d'adressage de la variable.

Le code de contrôle d'erreur est un code de redondance longitudinal.

L'application de la première fonction prédéterminée comprend le calcul de la disjonction exclusive de la valeur de la variable et de la donnée d'adressage de la variable.

La deuxième donnée de contrôle d'intégrité peut être calculée par encodage du type de la variable sur un nombre de bits prédéterminé, le nombre de bits étant fonction d'un nombre total de types de variables susceptibles d'être mémorisées dans la pile d'exécution.

Les données de contrôle d'intégrité de variable peuvent être ou dépendre du résultat de l'application d'une deuxième fonction prédéterminée à la première donnée de contrôle d'intégrité et à la deuxième donnée de contrôle d'intégrité.

La deuxième fonction prédéterminée peut être une concaténation appliquée à la première donnée de contrôle d'intégrité et à au moins une portion de la deuxième donnée de contrôle d'intégrité.

Comme indiqué précédemment, les données de contrôle d'intégrité peuvent mémorisées dans une seule et même pile de contrôle.

Alternativement,

- la première donnée de contrôle d'intégrité est mémorisée dans une première pile de contrôle,
- la deuxième donnée de contrôle d'intégrité est mémorisée dans une deuxième pile de contrôle différente de la première pile de contrôle,
- l'unique donnée d'adressage est adaptée pour localiser d'une part la première donnée de contrôle d'intégrité dans la première pile de contrôle et pour localiser d'autre part la deuxième donnée de contrôle d'intégrité dans la deuxième pile de contrôle.

Il peut en outre prévu que :

- la première donnée de contrôle d'intégrité soit mémorisée à une première adresse décalée d'un écart par rapport à une adresse de référence de la première pile de contrôle, l'écart étant compté en nombre de mots adressables dans la première pile de contrôle,
- la deuxième donnée de contrôle d'intégrité soit mémorisée à une deuxième adresse décalée dudit écart par rapport à une adresse de référence de la deuxième pile de contrôle,
- l'unique deuxième donnée d'adressage comprend, est, ou dépend dudit écart.

La deuxième donnée de contrôle d'intégrité peut être ou peut comprendre une copie de la valeur de la variable.

La première donnée de contrôle d'intégrité peut avoir une taille inférieure ou égale à la taille d'un mot adressable dans la première pile de contrôle.

Un mot adressable dans la première pile de contrôle peut avoir une taille inférieure à un mot adressable dans la deuxième pile de contrôle.

Il est également proposé, selon un deuxième aspect de l'invention, un produit programme d'ordinateur comprenant des instructions de code de programme pour l'exécution des étapes du procédé selon le premier aspect de l'invention, lorsque ce procédé est exécuté par au moins un processeur.

Il est également proposé, selon un troisième aspect de l'invention, un dispositif électronique, tel qu'une carte à puce, comprenant :

- au moins un processeur configuré pour exécuter un programme,
- au moins une mémoire adaptée pour contenir une pile d'exécution et au moins une pile de contrôle,

dans lequel le processeur est configuré pour :

- calculer de données de contrôle d'intégrité d'une variable mémorisée dans la pile d'exécution et destinée à être utilisée par le programme, les données de contrôle d'intégrité dépendant:

- ◦ du type de la variable, et
- ◦ de la valeur de la variable et/ou d'une première donnée d'adressage mémorisée dans un premier registre d'index, la première donnée d'adressage étant adaptée pour localiser la variable dans la pile d'exécution,

- commander la mémorisation, dans la ou chaque pile de contrôle, des données de contrôle d'intégrité de la variable,
- commander la mémorisation, dans un deuxième registre d'index, d'une unique deuxième donnée d'adressage adaptée pour localiser les données de contrôle d'intégrité dans la ou chaque pile de contrôle,
- commander la vérification d'intégrité de la variable mise en oeuvre lorsqu'un programme commande une lecture de la donnée d'adressage de la variable et/ou une lecture de la valeur de la variable, ladite vérification comprenant une comparaison entre les données de contrôle d'intégrité mémorisées dans la ou chaque pile de contrôle et de nouvelles données de contrôle d'intégrité calculées sur la base:

  d'un type de la variable vu par le programme lors de la commande de lecture, et
  de la valeur de la variable présente dans la pile d'exécution et/ou de la donnée d'adressage présente dans le premier registre d'index lors de la commande de lecture.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1a, déjà discutée, représente schématiquement le contenu d'une mémoire au cours de la mise en œuvre d'un procédé connu de l'état de la technique, protégeant une variable contre des attaques par injection de faute.
- La figure 1b, déjà discutée, représente schématiquement le contenu d'une mémoire au cours de la mise en œuvre d'un procédé susceptible de protéger une variable contre des attaques par injection de faute et par confusion de type,
- La figure 2 représente schématiquement un dispositif électronique selon un mode de réalisation de l'invention,
- La figure 3 représente schématiquement le contenu d'une mémoire au cours de la mise en œuvre d'un procédé de protection une variable contre des attaques par injection de faute et par confusion de type, selon un premier mode de réalisation de l'invention,

- La figure 4 est un organigramme d'étapes du procédé selon le premier mode de réalisation de l'invention,
- La figure 5 représente schématiquement le contenu d'une mémoire au cours de la mise en œuvre d'un procédé de protection une variable contre des attaques par injection de faute et par confusion de type, selon un deuxième mode de réalisation de l'invention

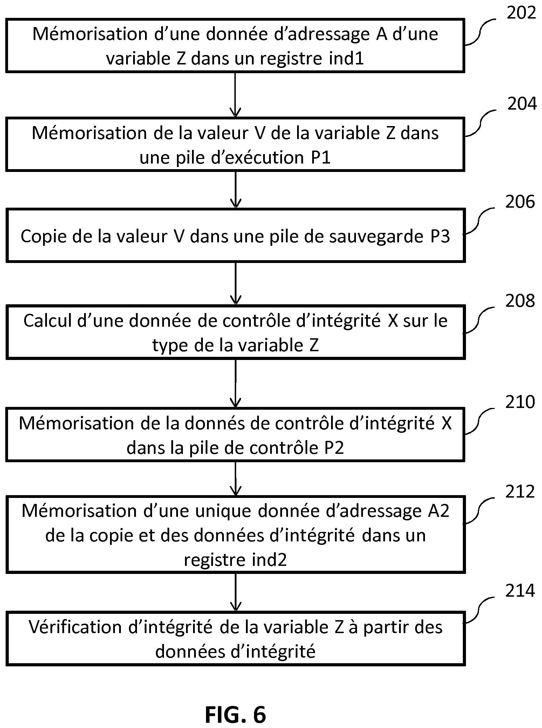

- La figure 6 est un organigramme d'étapes du procédé selon le premier mode de réalisation de l'invention.

Sur l'ensemble des figures, les éléments similaires portent des références identiques.

## DESCRIPTION DETAILLEE DE L'INVENTION

### Dispositif électronique de protection contre des attaques par injection de faute et par confusion de type

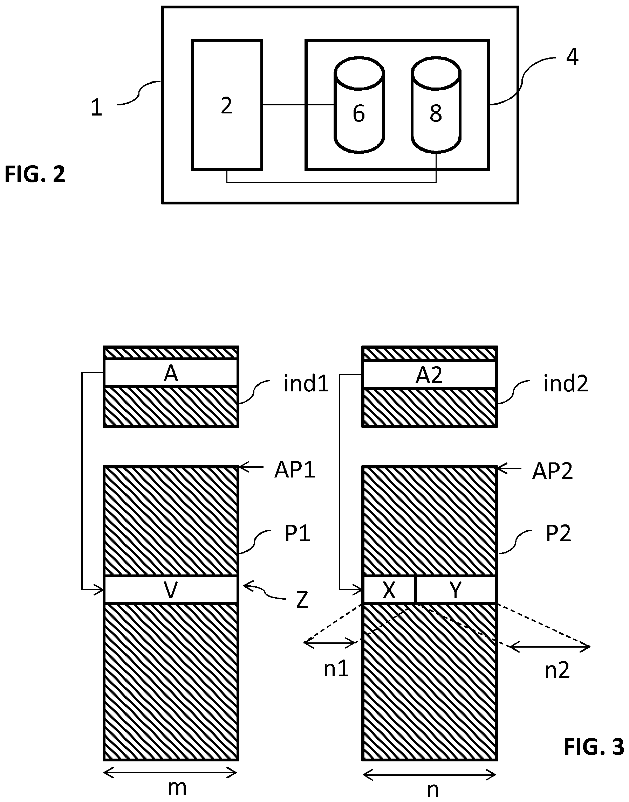

En référence à la **figure 2,** un dispositif électronique 1 comprend au moins un processeur 2 et au moins une mémoire 4.

La mémoire 4 comprend au moins une mémoire volatile 6, par exemple de type RAM. La mémoire volatile 6 a pour fonction de mémoriser temporairement des données, par exemple des données calculées par le processeur 2. Le contenu de la mémoire volatile 6 est effacé lors d'une mise hors tension du dispositif électronique 1.

La mémoire 4 comprend en outre au moins une mémoire non volatile 8, par exemple de type disque dur, SSD, flash, EEPROM, etc. La mémoire non volatile 8 a pour fonction de mémoriser des données de manière persistante, au sens où une mise hors tension du dispositif électronique 1 n'efface pas le contenu de la mémoire non volatile.

Le processeur 2 est adapté pour exécuter des instructions de code de programme appartenant à un jeu d'instructions prédéterminé.

Par extension, le processeur 2 est adapté pour exécuter un programme se présentant sous la forme d'un binaire compilé comprenant des instructions de codes appartenant à ce jeu d'instructions prédéterminé. On prendra l'exemple dans la suite d'un programme de type machine virtuelle.

La machine virtuelle est configurée pour interpréter un programme cible, le programme cible se présentant sous la forme d'un binaire comprenant des instructions de code dans un format différent du jeu d'instruction précité, lorsque la machine virtuelle est exécutée par le processeur 2.

Par exemple, une machine virtuelle JavaCard est configurée pour interpréter un « bytecode » issue d'un code source dans le langage de programmation JavaCard, qui est un langage de programmation orienté objet.

On suppose dans la suite que la machine virtuelle est mémorisée dans la mémoire non volatile 8, de même qu'un programme cible interprétable par la machine virtuelle.

Le dispositif électronique 1 est par exemple une carte à puce, telle qu'une carte SIM.

### Procédé de protection contre des attaques par injection de faute et par confusion de type (premier mode de réalisation)

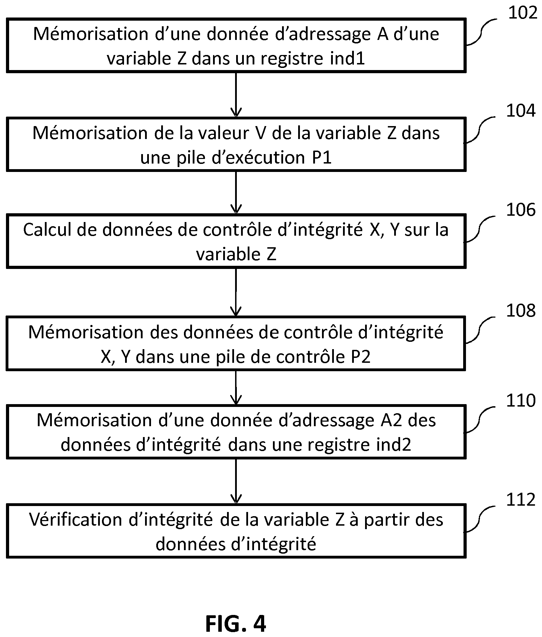

En référence aux **figures 3 et 4,** un procédé de protection selon un premier mode de réalisation comprend les étapes suivantes.

Le processeur 2 démarre l'exécution de la machine virtuelle.

La machine virtuelle alloue dans la mémoire volatile 6 une pile d'exécution P1 associée à un processus du programme cible à exécuter. Cette pile d'exécution P1 a vocation à contenir des variables dont le processus du programme cible a besoin au cours de son exécution par la machine virtuelle.

La pile d'exécution P1 est caractérisée par : une adresse de pile AP1, une taille, et une taille $m$ de mot adressable dans la pile P1.

Dans le présent texte, on considère qu'un mot adressable (« word-adressable ») dans une pile est une plus petite unité disposant d'une adresse mémoire propre dans la pile. Par conséquent, la taille d'un mot adressable est égale à l'écart entre deux adresses consécutives dans la pile.

L'adresse de pile AP1 est une adresse de début de la pile P1, comme représenté en figure 3, ou bien une adresse de fin de la pile P1.

La taille de la pile P1 est égale au nombre de mots adressables mémorisables dans la pile d'exécution P1 multiplié par la taille d'un de ces mots adressables. Par exemple, si la taille $m$ d'un mot adressable dans la pile P1 est de 32 bits et que le nombre de mots adressables simultanément mémorisables dans la pile P1 est 1024, la taille de la pile d'exécution P1 est de 32 x 1024 = 32768 bits.

La machine virtuelle alloue en outre dans la mémoire volatile 6 un premier registre d'index ind1 associé à la pile d'exécution P1. Le premier registre d'index ind1 est distinct de la pile d'exécution P1.

La machine virtuelle alloue en outre dans la mémoire volatile 6 une pile de contrôle P2, distincte de la pile d'exécution P1 et du premier registre d'index ind1. Comme on le verra dans la suite, cette pile de contrôle P2 sert à détecter la présence d'attaques par injection de faute et la présence d'attaques par confusion de type.

La machine virtuelle alloue en outre dans la mémoire volatile 6 un deuxième registre d'index ind2 associé à la pile de contrôle P2. Ce deuxième registre d'index ind2 est distinct de la pile d'exécution P1, de la pile de contrôle P2 et du premier registre d'index ind1.

Comme la pile d'exécution P1, la pile de contrôle P2 est caractérisée par : une adresse de pile AP2 (par exemple un adresse de début ou de fin de pile), une taille, et une taille *n* de mot adressable dans la pile de contrôle P2.

La taille de mot adressable *n* dans la pile de contrôle P2 est de préférence inférieure à la taille de mot adressable *m* dans la pile d'exécution P1, afin de limiter la consommation mémoire supplémentaire induite par l'allocation de la pile de contrôle P2, en sus de la pile d'exécution P1.

Au cours de l'exécution du processus du programme cible par la machine virtuelle, la machine virtuelle commande la mémorisation d'une variable Z dans la mémoire volatile 6.

La variable Z a une valeur V, une donnée d'adressage A et un type T.

La machine virtuelle mémorise la donnée d'adressage A dans le premier registre d'index ind1, la donnée d'adressage A étant adaptée pour localiser la valeur V de la variable Z dans la pile d'exécution P1 (étape 102).

La machine virtuelle mémorise la valeur V de la variable Z dans la pile d'exécution P1, à l'emplacement mémoire indiqué par la donnée d'adressage A (étape 104).

Par exemple, la donnée d'adressage A est un écart (ou adresse relative ou « offset » en anglais) entre l'adresse de la pile d'exécution P1 et l'adresse de la variable Z, cet écart étant compté en nombre de mot adressable dans la pile d'exécution P1. Ainsi, il suffit d'ajouter (ou retrancher) à l'adresse de la pile d'exécution P1 cet écart multiplié par la taille *m* de mot adressable dans la pile d'exécution P1 pour obtenir l'adresse de la variable Z, et ainsi accéder à la valeur V de cette variable Z.

Alternativement, la donnée d'adressage A est directement l'adresse de la valeur V dans la pile d'exécution P1.

De façon connue en soi, le type d'une variable définit les valeurs que peut prendre la variable ainsi que les opérateurs qui peuvent lui être appliqués lorsque celle-ci est utilisée par la machine virtuelle. A titre d'exemple, le type « char » est codé sur 8 bits et une variable de ce type peut donc prendre 256 valeurs différentes. Le nombre total de types des variables susceptibles d'être mémorisées dans la pile d'exécution P1 par la machine virtuelle est prédéterminé.

La machine virtuelle détermine le type T de la variable Z dont la valeur A et la zone d'adressage sont mémorisées. Cette détermination est mise en œuvre par la machine virtuelle par interprétation du « bytecode ».

La machine virtuelle calcule des données de contrôle d'intégrité sur la variable Z (étape 106).

Ces données de contrôle d'intégrité sont mémorisées dans la pile de contrôle P2 (étape 108).

La machine virtuelle mémorise par ailleurs une deuxième donnée d'adressage A2 dans le deuxième registre d'index ind2, la deuxième donnée d'adressage A2 étant adaptée pour localiser les données de contrôle d'intégrité dans la pile de contrôle P2 (étape 110).

La deuxième donnée d'adressage A2 est par exemple de même format que la donnée d'adressage A.

La deuxième donnée d'adressage A2 peut en variante résulter de l'application d'une fonction prédéterminée h à la donnée d'adressage A, conformément à la formule suivante :

$$A2 = h(A)$$

La fonction *h* peut être la fonction identité ou bien une autre fonction, par exemple une permutation.

Les données de contrôle d'intégrité dépendent :

* d'une part du type T de la variable, et
* d'autre part de la valeur V de la variable Z et/ou de la donnée d'adressage A de la variable Z adaptée pour localiser la valeur V dans la pile d'exécution P1.

Dans ce qui suit, on décrit un mode de réalisation particulier dans lequel les données de contrôle d'intégrité dépendent du type T de la variable Z, de la valeur V de la variable Z, et aussi de la donnée d'adressage A adaptée pour localiser la valeur V de la variable Z dans la pile d'exécution P1.

Le calcul 106 des données de contrôle d'intégrité comprend les étapes suivantes.

La machine virtuelle calcule une donnée X, représentative du type de la variable Z.

La donnée X est un encodage du type de la variable Z sur un nombre de bits prédéterminé *n1*, ce nombre de bits étant fonction du nombre total k de types de variables susceptibles d'être mémorisées dans la pile d'exécution P1.

De préférence, on choisit *n1* comme suit :

$$n1 = \lceil \log_2 k \rceil$$

où [x] désigne la partie entière par excès du nombre réel *x* (également appelé « plafond » de x ou « ceiling » en anglais). Autrement dit, on a :

$$\lceil x \rceil - 1 < x \le \lceil x \rceil$$

Par exemple, si le nombre total de types vaut 4, alors la donnée X est codée sur 2 bits : les valeurs binaires 00, 01, 10 et 11 sont les codes respectifs pour les quatre types.

La machine virtuelle calcule en outre une donnée de contrôle d'intégrité Y par application d'une fonction prédéterminée f à la valeur V de la variable Z et à la donnée d'adressage A de la variable Z. On a donc :

$$Y = f(V, A)$$

Les données de contrôle d'intégrité mémorisées dans la pile de contrôle P2 sont ou dépendent des données X et Y.

Par exemple, l'application de la fonction f comprend le calcul d'un code de contrôle d'erreur à une donnée intermédiaire dépendant de la valeur V de la variable Z et/ou de la donnée d'adressage A de la variable Z, telle qu'un code de redondance longitudinal (« LRC » en anglais). La donnée intermédiaire peut être la disjonction exclusive de la valeur V et de l'adresse A (opérateur « XOR »).

Ainsi, dans un mode de réalisation, on a :

$$Y = LRC(V\ XOR\ A)$$

Les données de contrôle d'intégrité peuvent être formées par une donnée résultant de l'application d'une fonction g prédéterminé aux données X et Y. En d'autres termes, les données de contrôle d'intégrité sont formées par la donnée :
g(X, Y)

Dans un mode de réalisation particulier, g est une concaténation appliquée à la donnée X (dont le nombre de bits est n1) et à au moins une portion de la donnée Y, ladite portion étant de longueur $n2$ en nombre de bits. On a :

$$g(X, Y) = X||Y$$

où ‖ désigne l'opérateur de concaténation.

Par exemple, la portion de Y est formée par les $n2$ bits de poids fort de la donnée Y.

De préférence, on choisit $n1$ et $n2$ tel que $n = n1 + n2$. Si $n1$ étant déterminé en fonction du nombre total de types de variables possibles, et s'il n'est pas possible de choisir $n$, on ajuste $n2$ de sorte à vérifier cette égalité. Ainsi, les données de contrôle d'intégrité occupent un espace de taille minimale dans la pile de contrôle P2, tout en étant porteur d'une quantité significative d'information.

Les étapes qui précèdent sont mises en œuvre chaque fois que la machine virtuelle met à jour la valeur de la variable Z dans la pile d'exécution P1.

Les étapes qui précèdent sont en outre mises en œuvre chaque fois qu'une nouvelle variable doit être mémorisée dans la mémoire volatile 6 (donc notamment lorsque d'une nouvelle valeur de variable est mémorisée à un emplacement libre de la pile d'exécution P1).

Ultérieurement, la machine virtuelle interprète une instruction de code du programme cible qui commande une lecture de la donnée d'adressage A de la variable Z et/ou une lecture de la valeur V de la variable Z.

La machine virtuelle met en œuvre une vérification d'intégrité de la variable à partir des données de contrôle d'intégrité X, Y mémorisées dans la pile de contrôle P2 (étape 112).

La vérification d'intégrité comprend des sous-étapes de :

- lecture de la donnée d'adressage de la variable Z présente dans le premier registre d'index ind1 lors de la commande en lecture,
- localisation de la valeur de la variable Z présente dans la pile d'exécution P1 sur la base de la donnée d'adressage lue,
- lecture, dans la pile d'exécution P1, de la valeur de la variable Z ainsi localisée,
- détermination, à partir de ladite instruction de code du programme, du type de la variable Z vu par le programme.

La vérification d'intégrité comprend en outre un calcul de nouvelles données de contrôle d'intégrité sur la base des données lues, au moyen des mêmes fonctions que celles mises en œuvre pour calculer les données de contrôle d'intégrité X, Y préalablement mémorisées dans la pile de contrôle P2.

La vérification d'intégrité comprend en outre des étapes de :

- lecture, dans le deuxième registre d'index ind2, de la donnée d'adressage relative aux données de contrôle d'intégrité sur la variable, et
- localisation de la donnée d'intégrité présente dans la pile de contrôle P2 sur la base de la donnée d'adressage lue A2.

La vérification d'intégrité comprend en outre une comparaison entre les nouvelles données de contrôle d'intégrité calculées et les données de contrôle d'intégrité X, Y lues depuis la pile de contrôle P2.

Dans un cas de fonctionnement normal, les valeurs A, V, T n'ont pas changé depuis la mémorisation 102, 104 de la variable. Par conséquent, les nouvelles données de contrôle d'intégrité et les données de contrôle d'intégrité lues depuis la pile de contrôle P2 sont égales. Dans ce cas, la machine virtuelle continue à exécuter le programme cible.

Considérons à présent différents cas d'attaque du dispositif électronique.

Dans le cas où une attaque par injection de faute sur la valeur V de la variable Z a été mise en œuvre, la valeur V mémorisée dans la pile d'exécution P1 a été modifiée en une valeur V'.

Dans le cas d'attaque où une injection de faute sur l'adresse A de la variable a été mise en œuvre, la valeur A mémorisée dans le premier registre d'index ind1 a été modifiée en une valeur A'.

Dans un troisième cas d'attaque par confusion de type a été mise en œuvre sur la variable Z, la machine virtuelle croit par erreur que le type de la variable mémorisé n'est pas T mais un autre type T'.

Dans l'un quelconque de ces trois cas (ou une combinaison de ceux-ci), les nouvelles données de contrôle d'intégrité calculées au cours de l'étape de vérification d'intégrité sont différentes des données de contrôle d'intégrité lues depuis la pile de contrôle P2. La machine virtuelle peut alors générer un signal d'erreur, stopper l'exécution du processus du programme concerné par la variable attaquée, stopper tous les processus du programme, s'arrêter complètement, voir déclencher une mise hors tension ou un redémarrage du dispositif électronique.

Le procédé proposé permet ainsi de protéger le dispositif électronique 1 contre des attaques par injection de faute et par confusion de type, sans pour autant requérir une quantité importante de mémoire supplémentaire. En effet, une unique pile de contrôle P2 est utilisée pour mémoriser les données de contrôle d'intégrité X, Y permettant de détecter aussi bien une attaque par injection de faute et qu'une attaque par confusion de type.

**Procédé de protection contre des attaques par injection de faute et par confusion de type (deuxième mode de réalisation)**

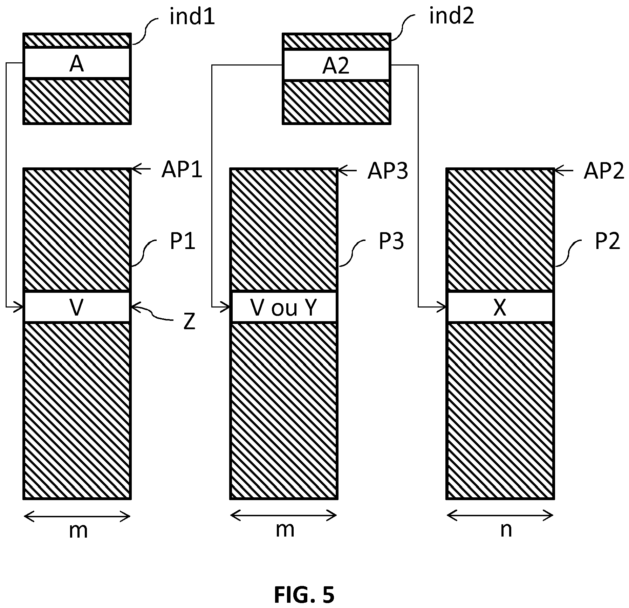

En référence à la **figure 5,** un procédé selon un deuxième mode de réalisation comprend les étapes suivantes pour protéger une variable Z contre des attaques par injection de faute et par confusion de type.

La variable Z a une valeur mémorisée dans une pile d'exécution P1 identique à celle du premier mode de réalisation, et une donnée d'adressage A mémorisée dans un premier registre d'index ind1 identique à celui du premier mode de réalisation (étapes 202, 204).

La machine virtuelle alloue dans la mémoire volatile 6 une pile de contrôle P2 similaire à celle du premier mode de réalisation, et une pile de contrôle P3 différente des piles d'exécution P1 et de contrôle P2.

La machine virtuelle alloue en outre dans la mémoire volatile 6 un deuxième registre d'index ind2.

La pile de contrôle P3 est de même taille que la pile d'exécution P1 ; la taille *m* de mot adressable dans la pile P3 est égale à la taille de mot adressable dans la pile d'exécution P1.

La machine virtuelle mémorise dans la pile de contrôle P3 une copie de la valeur V de la variable (étape 206).

En variante, la machine virtuelle mémorise dans la pile de contrôle P3 une donnée de contrôle d'intégrité dépendant de la valeur V de la variable Z et/ou de la donnée d'adressage A de la variable Z adaptée pour localiser la valeur V dans la pile d'exécution P1 (par exemple la donnée Y précédemment décrite dans le cadre du premier mode de réalisation).

Par ailleurs, la machine virtuelle calcule et mémorise dans la pile de contrôle P2 une donnée de contrôle d'intégrité sur le type T de la variable Z (par exemple la donnée X précédemment décrite dans le cadre du premier mode de réalisation) (étapes 208, 210).

Ainsi, à la différence du premier mode de réalisation, qui n'utilise qu'une seule et même pile de contrôle pour mémoriser les données de contrôle d'intégrité, les données de contrôle d'intégrité sont réparties dans plusieurs piles de contrôles différentes P2 et P3.

La machine virtuelle mémorise par ailleurs dans le registre d'index ind2 une unique donnée d'adressage A2 adaptée pour localiser d'une part la copie de la valeur V dans la pile de contrôle P3 et pour localiser d'autre part dans la pile de contrôle P2 la donnée de contrôle d'intégrité sur type T de la variable Z (étape 212).

En d'autres termes, les deux piles supplémentaires P2 et P3 allouées partagent le même registre d'index ind2, ce qui permet d'économiser la quantité de mémoire consommée pour protéger la variable Z.

Ultérieurement, la machine virtuelle interprète une instruction de code du programme cible qui commande une lecture de la donnée d'adressage A de la variable Z et/ou une lecture de la valeur V de la variable Z.

L'intégrité de la variable Z est vérifiée (étape 214) par la machine virtuelle.

Pour vérifier l'intégrité de la variable Z, sensiblement les mêmes étapes que celles décrites dans le cadre du premier mode de réalisation sont mises en œuvre.

La vérification d'intégrité comprend ainsi des étapes de :

- lecture, dans le premier registre d'index ind1, de la donnée d'adressage A de la variable Z,
- localisation de la valeur V de la variable présente dans la pile d'exécution P1 sur la base de la donnée d'adressage A lue,
- lecture, dans la pile d'exécution P1, de la valeur V de la variable localisée,
- détermination du type T de la variable vu par le programme.

La vérification d'intégrité comprend ensuite un calcul d'une nouvelle donnée de contrôle d'intégrité sur le type, au moyen des mêmes fonctions que celles mises en œuvre pour calculer la donnée de contrôle d'intégrité sur le type de la variable Z, donnée qui a été préalablement mémorisée dans la pile de contrôle P2.

Si une donnée d'intégrité se présentant sous une autre forme qu'une copie de la valeur V a été mémorisée dans la pile de contrôle P3 (par exemple la donnée Y), la vérification d'intégrité comprend en outre un calcul d'une nouvelles donnée de contrôle d'intégrité sur la base des données lues, au moyen de la même fonction que celle mises en œuvre pour calculer la donnée de contrôle d'intégrité préalablement mémorisée dans la pile de contrôle P3.

La vérification d'intégrité comprend en outre des étapes de :

- lecture, dans le deuxième registre d'index ind2, de la donnée d'adressage A2 de la donnée d'intégrité associée à la variable, et

- localisation de la donnée d'intégrité X présente dans la pile de contrôle P2 sur la base de la donnée d'adressage A2 lue,
- localisation de donnée d'intégrité présente dans la pile de contrôle P3 sur la base de la même donnée d'adressage A2 lue (copie de la valeur de la variable Z, donnée Y ou autre).

La vérification d'intégrité comprend en outre :

- une comparaison entre la nouvelle donnée de contrôle d'intégrité calculée et la données de contrôle d'intégrité X lue depuis la pile de contrôle P3, et
- une comparaison entre la valeur de la variable Z présente dans la pile d'exécution P1 et la valeur copiée lue depuis la pile de contrôle P3, ou une comparaison entre la nouvelle données de contrôle d'intégrité calculée Y et la données de contrôle Y lues depuis la pile de contrôle P3, selon la nature de la donnée mémorisée dans la pile P3 (copie de V ou donnée Y).

En cas de double égalité, la machine virtuelle continue à exécuter le programme cible.

Sinon, il est considéré que la variable Z a subi une attaque (par injection de faute ou confusion de type). Dans ce cas, la machine virtuelle peut alors mettre en œuvre les mêmes traitements que ceux décrits dans le cadre du premier mode de réalisation (générer un signal d'erreur, stopper l'exécution du processus du programme concerné par la variable attaquée, etc.).

On peut noter que le fait d'utiliser une copie de la valeur V comme donnée d'intégrité permet d'accélérer l'étape de vérification d'intégrité. En effet, il n'est pas besoin de procéder à un calcul de données d'intégrité pour vérifier que la valeur V n'a pas changé : il suffit de comparer les valeurs présentes dans les piles P1 et P3.

La donnée d'adressage A2 mémorisée dans le registre d'index ind2 est par exemple un nombre de mots adressables dans l'une ou l'autre des piles P2 et P3, le dit nombre de mots adressables étant égal à :

- un écart (ou adresse relative ou « offset » en anglais) entre une adresse de la copie dans la première pile de contrôle et une adresse AP2 de la pile de contrôle P2,
- un écart entre une adresse des données de contrôle d'intégrité dans la première pile de contrôle et une adresse AP3 de la pile de contrôle P3.

Les adresses AP2, AP3 peuvent être des adresses de début de pile (comme représenté en figure 5) ou des adresses de fin de pile.

Comme indiqué précédemment, il suffit d'ajouter (ou retrancher) à l'adresse AP2 de la pile P2 cet écart multiplié par la taille *n* de mot adressable dans la pile P2 pour obtenir l'adresse de la donnée X dans la pile de contrôle P2.

Similairement, il suffit d'ajouter (ou retrancher) à l'adresse AP3 de la pile de contrôle P3 ce même écart multiplié par la taille *m* de mot adressable dans la pile de contrôle P3 pour obtenir l'adresse de la copie de la valeur de la variable Z mémorisée dans la pile de contrôle P3.

En variante, la donnée d'adressage A2 peut résulte de l'application d'une fonction prédéterminée *h* à la donnée d'adressage A (par exemple lorsque cette donnée d'adressage est un « offset »), comme cela a été présenté ci-dessus pour le premier mode de réalisation.

La donnée d'intégrité sur le type est par exemple la donnée X décrite dans le cadre du premier mode de réalisation, de longueur *n*1. Par exemple, on choisit *n*1 = *n*.

De préférence, un mot adressable dans la pile de contrôle P2 a une taille *n* inférieure à la taille *m* d'un mot adressable dans la pile de contrôle P3. Ceci permet de réduire davantage la mémoire supplémentaire consommée pour protéger la variable. En effet, la taille d'une variable Z peut varier en fonction de son type (c'est-à-dire que la longueur en nombre de bit de la valeur V varie en fonction du type T de la variable Z) et même relativement grande par rapport à la longueur *n*1.

**Revendications**

1. Procédé de protection d'un dispositif électronique (1) exécutant un programme contre des attaques par injection de faute et par confusion de type susceptibles d'affecter une variable (Z) destinée à être utilisée par le programme, le procédé étant **caractérisé en ce qu'**il comprend des étapes de :

    • calcul de données de contrôle d'intégrité (X, Y) de variable (Z), les données de contrôle d'intégrité dépendant:

        ◦ d'un type (T) de la variable (Z), et
        ◦ d'une valeur (V) de la variable (Z) mémorisée dans une pile d'exécution (P1) et/ou d'une première donnée d'adressage (A) mémorisée dans un premier registre d'index (ind1), la première donnée d'adressage (A) étant adaptée pour localiser la valeur (V) mémorisée dans la pile d'exécution (P1),

    • mémorisation des données de contrôle (X, Y) d'intégrité sur la variable (Z) dans au moins une pile de contrôle (P2, P3) différente de la pile d'exécution (P1),
    • mémorisation, dans un deuxième registre d'index (ind2), d'une unique deuxième donnée d'adressage (A2) adaptée pour localiser les données de contrôle d'intégrité (X, Y) dans la ou chaque pile de contrôle (P2, P3)
    • vérification d'intégrité de la variable (Z) mise en œuvre lorsqu'un programme commande une lecture de la donnée d'adressage (A) de la variable (Z) et/ou une lecture de la valeur (V) de la variable (Z), ladite vérification comprenant une comparaison entre les données de contrôle d'intégrité mémorisées dans la ou chaque pile de contrôle (P2, P3) et de nouvelles données de contrôle d'intégrité calculées sur la base :

    ∘ d'un type (T, T') de la variable (Z) vu par le programme lors de la commande de lecture, et
    ∘ de la valeur (V, V') de la variable (Z) présente dans la pile d'exécution (P1) et/ou de la donnée d'adressage (A, A') présente dans le premier registre d'index (ind1) lors de la commande de lecture.

2. Procédé selon la revendication précédente, dans lequel les données de contrôle d'intégrité calculées dépendent de ou comprennent :

    • une première donnée de contrôle d'intégrité (X) dépendant du type de la variable,
    • une deuxième donnée de contrôle d'intégrité (V, Y) dépendant de la valeur de la variable et/ou de la première donnée d'adressage (A).

3. Procédé selon la revendication précédente, dans lequel la première donnée de contrôle d'intégrité (Y) est calculée par application d'une première fonction prédéterminée à la valeur (V) de la variable (Z) et à la donnée d'adressage (A).

4. Procédé selon la revendication précédente, dans lequel l'application de la première fonction prédéterminée comprend le calcul d'un code de contrôle d'erreur à une donnée dépendant de la valeur (V) de la variable (Z) et/ou de la donnée d'adressage (A) de la variable (Z).

5. Procédé selon la revendication précédente, dans lequel le code de contrôle d'erreur est un code de redondance longitudinal.

6. Procédé selon l'une des revendications 3 à 5, dans lequel l'application de la première fonction prédéterminée comprend le calcul de la disjonction exclusive de la valeur (V) de la variable (Z) et de la donnée d'adressage (A) de la variable (Z).

7. Procédé selon l'une des revendications 2 à 6, dans lequel la deuxième donnée de contrôle d'intégrité (X) est calculée par encodage du type de la variable (Z) sur un nombre de bits prédéterminé, le nombre de bits étant fonction d'un nombre total de types de variables susceptibles d'être mémorisées dans la pile d'exécution (P1).

8. Procédé selon l'une des revendications 2 à 7, dans lequel les données de contrôle d'intégrité de variable (Z) sont ou dépendent du résultat de l'application d'une deuxième fonction prédéterminée à la première donnée de contrôle d'intégrité et à la deuxième donnée de contrôle d'intégrité.

9. Procédé selon la revendication précédente, dans lequel la deuxième fonction prédéterminée est une concaténation appliquée à la première donnée de contrôle d'intégrité et à au moins une portion de la deuxième donnée de contrôle d'intégrité.

10. Procédé selon l'une des revendications précédentes, dans lequel les données de contrôle d'intégrité (X, Y) sont mémorisées dans une seule et même pile de contrôle (P2).

11. Procédé selon l'une des revendications 2 à 9, dans lequel

    • la première donnée de contrôle d'intégrité (X) est mémorisée dans une première pile de contrôle (P2),
    • la deuxième donnée de contrôle d'intégrité (V, Y) est mémorisée dans une deuxième pile de contrôle (P3) différente de la première pile de contrôle (P2),
    • l'unique donnée d'adressage (A2) est adaptée pour localiser d'une part la première donnée de contrôle d'intégrité dans la première pile de contrôle (P2) et pour localiser d'autre part la deuxième donnée de contrôle d'intégrité dans la deuxième pile de contrôle (P3).

12. Procédé selon la revendication précédente, dans lequel :

    • la première donnée de contrôle d'intégrité (X) est mémorisée à une première adresse décalée d'un écart par rapport à une adresse de référence de la première pile de contrôle, l'écart étant compté en nombre de mots adressables dans la première pile de contrôle,
    • la deuxième donnée de contrôle d'intégrité (V, Y) est mémorisée à une deuxième adresse décalée dudit écart par rapport à une adresse de référence de la deuxième pile de contrôle,
    • l'unique deuxième donnée d'adressage (A2) comprend, est ou dépend dudit écart.

13. Procédé selon l'une des revendications 11 à 12, dans lequel la deuxième donnée de contrôle d'intégrité est ou comprend une copie de la valeur (V) de la variable (Z).

14. Procédé selon l'une des revendications 11 à 13, dans lequel la première donnée de contrôle d'intégrité (X) a une taille inférieure ou égale à la taille d'un mot adressable dans la première pile de contrôle (P2).

15. Procédé selon l'une des revendications 11 à 14, dans lequel un mot adressable dans la première pile de contrôle (P2) a une taille inférieure à un mot adressable dans la deuxième pile de contrôle (P3).

16. Produit programme d'ordinateur comprenant des instructions de code de programme pour l'exécution des étapes du procédé selon l'une des revendications précédentes, lorsque ce procédé est exécuté par au moins un processeur (2).

17. Dispositif électronique, tel qu'une carte à puce, comprenant :

> • au moins un processeur (2) configuré pour exécuter un programme,
> • au moins une mémoire (4) adaptée pour contenir une pile d'exécution (P1) et au moins une pile de contrôle (P2),

le dispositif étant **caractérisé en ce que** le processeur (2) est configuré pour :

> • calculer de données de contrôle d'intégrité (X, Y) d'une variable (Z) mémorisée dans la pile d'exécution (P1) et destinée à être utilisée par le programme, les données de contrôle d'intégrité dépendant:
>
>> ◦ du type de la variable (Z), et
>> ◦ de la valeur (V) de la variable (Z) et/ou d'une première donnée d'adressage (A) mémorisée dans un premier registre d'index (ind1), la première donnée d'adressage (A) étant adaptée pour localiser la variable (Z) dans la pile d'exécution (P1),
>
> • commander la mémorisation, dans la ou chaque pile de contrôle (P2), des données de contrôle d'intégrité (X, Y) de la variable (Z),
> • commander la mémorisation, dans un deuxième registre d'index (ind2), d'une unique deuxième donnée d'adressage (A2) adaptée pour localiser les données de contrôle d'intégrité (X, Y) dans la ou chaque pile de contrôle (P2, P3),
> • commander la vérification d'intégrité de la variable (Z) mise en œuvre lorsqu'un programme commande une lecture de la donnée d'adressage (A) de la variable (Z) et/ou une lecture de la valeur (V) de la variable (Z), ladite vérification comprenant une comparaison entre les données de contrôle d'intégrité mémorisées dans la ou chaque pile de contrôle (P2, P3) et de nouvelles données de contrôle d'intégrité calculées sur la base :

>> ◦ d'un type (T, T') de la variable (Z) vu par le programme lors de la commande de lecture, et
>> ◦ de la valeur (V, V') de la variable (Z) présente dans la pile d'exécution (P1) et/ou de la donnée d'adressage (A, A') présente dans le premier registre d'index (ind1) lors de la commande de lecture.

**Patentansprüche**

1. Verfahren zum Schutz einer elektronischen Vorrichtung (1), die ein Programm gegen Angriffe durch Fehlerinjektion und durch Typenverwirrung ausführt, die eine Variable (Z) beeinflussen können, die dazu bestimmt ist, von dem Programm verwendet zu werden, wobei das Verfahren **dadurch gekennzeichnet ist, dass** es die folgenden Schritte umfasst:

> • Berechnen von Integritätsüberwachungsdaten (X, Y) einer Variablen (Z), wobei die Integritätsüberwachungsdaten von Folgendem abhängig sind:
>
>> ° von einem Typen (T) der Variablen (Z), und
>> ° von einem Wert (V) der Variablen (Z), der in einem Ausführungsstapel (P1) gespeichert ist, und/ oder von einem ersten Adressierdatum (A), das in einem ersten Indexregister (indl) gespeichert ist, wobei das erste Adressierdatum (A) ausgeführt ist, um den Wert (V) zu lokalisieren, der in dem Ausführungsstapel (P1) gespeichert ist,
>
> • Speichern der Integritätsüberwachungsdaten (X, Y) über die Variable (Z) in mindestens einem Überwachungsstapel (P2, P3), der sich von dem Ausführungsstapel (P1) unterscheidet,
> • Speichern in einem zweiten Indexregister (ind2) eines eindeutigen zweiten Adressierdatums (A2), das ausgeführt ist, um die Integritätsüberwachungsdaten (X, Y) in dem oder jedem Überwachungsstapel (P2, P3) zu lokalisieren
> • Überprüfen einer Integrität der Variablen (Z), das dann umgesetzt wird, wenn ein Programm ein Lesen des Adressierdatums (A) der Variablen (Z) und/ oder ein Lesen des Werts (V) der Variablen (Z) anordnet, wobei das Überprüfen einen Vergleich zwischen den in dem oder jedem Überwachungsstapel (P2, P3) gespeicherten Integritätsüberwachungsdaten und neuen Integritätsüberwachungsdaten umfasst, die auf der Basis berechnet werden:

° von einem Typen (T, T') der Variablen (Z), der von dem Programm bei der Leseanordnung gesehen wird, und

° von dem Wert (V, V') der Variablen (Z), die in dem Ausführungsstapel (P1) vorhanden ist, und/ oder des Adressierdatums (A, A'), das in dem ersten Indexregister (indl) vorhanden ist, bei der Leseanordnung.

2. Verfahren nach dem vorstehenden Anspruch, wobei die berechneten Integritätsüberwachungsdaten abhängig sind von, oder umfassen:

  • ein erstes Integritätsüberwachungsdatum (X), das vom Typen der Variablen abhängig ist,
  • ein zweites Integritätsüberwachungsdatum (V, Y), das vom Wert der Variablen und/ oder von dem ersten Adressierdatum (A) abhängig ist.

3. Verfahren nach dem vorstehenden Anspruch, wobei das erste Integritätsüberwachungsdatum (Y) durch Anwenden einer ersten vorbestimmten Funktion auf den Wert (V) der Variablen (Z) und auf das Adressierdatum (A) berechnet wird.

4. Verfahren nach dem vorstehenden Anspruch, wobei das Anwenden der ersten vorbestimmten Funktion das Berechnen eines Fehlerüberwachungscodes auf einem Datum umfasst, das von dem Wert (V) der Variablen (Z) und/ oder von dem Adressierdatum (A) der Variablen (Z) abhängig ist.

5. Verfahren nach dem vorstehenden Anspruch, wobei der Fehlerüberwachungscode ein Redundanzcode in Längsrichtung ist.

6. Verfahren nach einem der Ansprüche 3 bis 5, wobei das Anwenden der ersten vorbestimmten Funktion das Berechnen der ausschließenden Disjunktion des Wertes (V) der Variablen (Z) und des Adressierdatums (A) der Variablen (Z) umfasst.

7. Verfahren nach einem der Ansprüche 2 bis 6, wobei das zweite Integritätsüberwachungsdatum (X) durch Codieren des Typs der Variablen (Z) über eine vorbestimmte Anzahl an Bits berechnet wird, wobei die Anzahl an Bits von einer Gesamtanzahl an Variablentypen abhängig ist, die im Ausführungsstapel (P1) gespeichert sein können.

8. Verfahren nach einem der Ansprüche 2 bis 7, wobei die Integritätsüberwachungsdaten einer Variablen (Z) das Ergebnis der Anwendung einer zweiten vorbestimmten Funktion auf das erste Integritätsüberwachungsdatum und auf das zweite Integritätsüberwachungsdatum sind oder davon abhängig sind.

9. Verfahren nach dem vorstehenden Anspruch, wobei die zweite vorbestimmte Funktion eine Verknüpfung ist, die auf das erste Integritätsüberwachungsdatum und auf mindestens einen Abschnitt des zweiten Integritätsüberwachungsdatums angewendet wird.

10. Verfahren nach einem der vorstehenden Ansprüche, wobei die Integritätsüberwachungsdaten (X, Y) in einem einzigen und gleichen Überwachungsstapel (P2) gespeichert sind.

11. Verfahren nach einem der Ansprüche 2 bis 9, wobei

  • das erste Integritätsüberwachungsdatum (X) in einem ersten Überwachungsstapel (P2) gespeichert wird,
  • das zweite Integritätsüberwachungsdatum (V, Y) in einem zweiten Überwachungsstapel (P3) gespeichert wird, der sich von dem ersten Überwachungsstapel (P2) unterscheidet,
  • das eindeutige Adressierdatum (A2) ausgeführt ist, um einerseits das erste Integritätsüberwachungsdatum im ersten Überwachungsstapel (P2) zu lokalisieren und um andererseits das zweite Integritätsüberwachungsdatum im zweiten Überwachungsstapel (P3) zu lokalisieren.

12. Verfahren nach dem vorstehenden Anspruch, wobei:

  • das erste Integritätsüberwachungsdatum (X) unter einer ersten Adresse gespeichert wird, die in einem Abstand in Bezug zu einer Referenzadresse des ersten Überwachungsstapels versetzt ist, wobei der Abstand in einer Anzahl an adressierbaren Wörtern im ersten Überwachungsstapel gezählt wird,
  • das zweite Integritätsüberwachungsdatum (V, Y) unter einer zweiten Adresse gespeichert wird, die in dem Abstand in Bezug zu einer Referenzadresse des zweiten Überwachungsstapels versetzt ist,
  • das eindeutige zweite Adressierdatum (A2) den Abstand umfasst, derselbe ist oder davon abhängig ist.

13. Verfahren nach einem der Ansprüche 11 und 12, wobei das zweite Integritätsüberwachungsdatum eine Kopie des Werts (V) der Variablen (Z) ist oder diese umfasst.

14. Verfahren nach einem der Ansprüche 11 bis 13, wobei das erste Integritätsüberwachungsdatum (X) eine Größe kleiner oder gleich der Größe eines adressierbaren Worts im ersten Überwachungsstapel (P2) aufweist.

15. Verfahren nach einem der Ansprüche 11 bis 14, wobei ein adressierbares Wort im ersten Überwachungsstapel (P2) eine Größe kleiner als ein adressierbares Wort im zweiten Überwachungsstapel (P3) aufweist.

16. Computerprogrammprodukt, Programmcodeanweisungen zur Ausführung der Schritte des Verfahrens nach einem der vorstehenden Ansprüche umfassend, wenn dieses Verfahren durch mindestens einen Prozessor (2) ausgeführt wird.

17. Elektronische Vorrichtung, in der Art einer Chipkarte, Folgendes umfassend:

    • mindestens einen Prozessor (2), der konfiguriert ist, um ein Programm auszuführen,
    • mindestens einen Speicher (4), der ausgeführt ist, um einen Ausführungsstapel (P1) und mindestens einen Überwachungsstapel (P2) zu enthalten,

    wobei die Vorrichtung **dadurch gekennzeichnet ist, dass** der Prozessor (2) konfiguriert ist zum:

    • Berechnen von Integritätsüberwachungsdaten (X, Y) einer Variablen (Z), die im Ausführungsstapel (P1) gespeichert ist und dazu bestimmt ist, von dem Programm verwendet zu werden, wobei die Integritätsüberwachungsdaten abhängig sind:

        ° vom Typen der Variablen (Z), und
        ° vom Wert (V) der Variablen (Z), und/ oder von einem ersten Adressierdatum (A), das in einem ersten Indexregister (indl) gespeichert ist, wobei das erste Adressierdatum (A) ausgeführt ist, um die Variable (Z) im Ausführungsstapel (P1) zu lokalisieren,

    • Anordnen der Speicherung der Integritätsüberwachungsdaten (X, Y) der Variablen (Z) in dem oder jedem Überwachungsstapel (P2),
    • Anordnen der Speicherung in einem zweiten Indexregister (ind2) eines eindeutigen zweiten Adressierdatums (A2), das ausgeführt ist, um die Integritätsüberwachungsdaten (X, Y) in dem oder jedem Überwachungsstapel (P2, P3) zu lokalisieren,
    • Anordnen der Integritätsüberprüfung der Variablen (Z), die umgesetzt wird, wenn ein Programm ein Lesen des Adressierdatums (A) der Variablen (Z) und/ oder ein Lesen des Werts (V) der Variablen (Z) anordnet, wobei das Überprüfen einen Vergleich zwischen den in dem oder jedem Überwachungsstapel (P2, P3) gespeicherten Integritätsüberwachungsdaten und neuen Integritätsüberwachungsdaten umfasst, die auf der Basis berechnet werden:

° von einem Typen (T, T') der Variablen (Z), der von dem Programm bei der Leseanordnung gesehen wird, und
° von dem Wert (V, V') der Variablen (Z), die in dem Ausführungsstapel (P1) vorhanden ist, und/ oder des Adressierdatums (A, A'), das in dem ersten Indexregister (indl) vorhanden ist, bei der Leseanordnung.

## Claims

1. Method for protecting an electronic device (1) executing a program against fault injection and type confusion attacks likely to affect a variable (Z) intended to be used by the program, the method being **characterized in that** it comprises steps of:

    • calculating integrity check data (X, Y) of variable (Z), wherein the integrity check data depend on:

        ◦ a type (T) of the variable (Z), and
        ◦ a value (V) of the variable (Z) stored in an execution stack (P1) and/or a first addressing datum (A) stored in a first index register (ind1), wherein the first addressing datum (A) is adapted to locate the value (V) stored in the execution stack (P1),

    • storing the integrity check data (X, Y) on the variable (Z) in at least one control stack (P2, P3) different to the execution stack (P1),
    • storing, in a second index register (ind2), a unique second addressing datum (A2) adapted to locate the integrity check data (X, Y) in the or each control stack (P2, P3).
    • verification of integrity of the variable (Z) performed when a program commands reading of the addressing datum (A) of the variable (Z) and/or reading of the value (V) of the variable (Z), said verification comprising comparison between the integrity check data stored in the or each control stack (P2, P3) and new integrity check data calculated on the basis of:

        ◦ a type (T, T') of the variable (Z) seen by the program during the reading command, and
        ◦ the value (V, V') of the variable (Z) present in the execution stack (P1) and/or of the addressing datum (A, A') present in the first index register (ind1) during the reading command.

2. Method according to the preceding claim, wherein the calculated integrity check data depend on or comprise:

- a first integrity check datum (X) dependent on the type of the variable,
- a second integrity check datum (V, Y) dependent on the value of the variable and/or of the first addressing datum (A).

3. Method according to the preceding claim, wherein the first integrity check datum (Y) is calculated by applying a first preset function to the value (V) of the variable (Z) and to the addressing datum (A).

4. Method according to the preceding claim, wherein applying the first preset function comprises calculating an error control code to a datum dependent on the value (V) of the variable (Z) and/or of the addressing datum (A) of the variable (Z).

5. Method according to the preceding claim, wherein the error control code is a longitudinal redundancy code.

6. Method according to one of claims 3 to 5, wherein applying the first preset function comprises calculating an exclusive disjunction of the value (V) of the variable (Z) and of the addressing datum (A) of the variable (Z).

7. Method according to one of claims 2 to 6, wherein the second integrity check datum (X) is calculated by encoding the type of the variable (Z) on a number of preset bits, the number of bits being function of a total number of types of variables storable in the execution stack (P1).

8. Method according to one of claims 2 to 7, wherein the integrity check data of variable (Z) are or depend on a result of applying a second preset function to the first integrity check datum and to the second integrity check datum.

9. Method according to the preceding claim, wherein the second preset function is a concatenation applied to the first integrity check datum and to at least one portion of the second integrity check datum.

10. Method according to one of the preceding claims, wherein the integrity check data (X, Y) is stored in one single control stack (P2).

11. Method according to one of claims 2 to 9, wherein

- the first integrity check datum (X) is stored in a first control stack (P2),
- the second integrity check datum (V, Y) is stored in a second control stack (P3) different to the first control stack (P2),
- the unique addressing datum (A2) is adapted to locate both the first integrity check datum in the first control stack (P2) and the second integrity check datum in the second control stack (P3).

12. Method according to the preceding claim, wherein:

- the first integrity check datum (X) is stored at a first address offset from an offset relative to a reference address of the first control stack, the offset being counted in number of words in the first control stack,
- the second integrity check datum (V, Y) is stored at a second address offset from said offset relative to a reference address of the second control stack,
- the unique second addressing datum (A2) comprises, is or depends on said offset.

13. Method according to one of claims 11 to 12, wherein the second integrity check datum is or comprises a copy of the value (V) of the variable (Z).

14. Method according to one of claims 11 to 13, wherein the first integrity check datum (X) has a size less than or equal to the size of a word in the first control stack (P2).

15. Method according to one of claims 11 to 14, wherein a word in the first control stack (P2) has a size less than a word in the second control stack (P3).

16. Computer program product comprising program code instructions for executing the steps of the method according to one of the preceding claims, when this method is executed by at least one processor (2).

17. Electronic device, such as a smart card, comprising:

- at least one processor (2) configured to execute a program,
- at least one memory (4) adapted to contain an execution stack (P1) and at least one control stack (P2),

the device being **characterized in that** the processor (2) is configured to:

- calculate integrity check data (X, Y) of a variable (Z) stored in the execution stack (P1) and intended to be used by the program, wherein the integrity check data depend on:

  ○ the type of the variable (Z), and
  ○ a value (V) of the variable (Z) and/or of a first addressing datum (A) stored in a first index register (ind1), wherein the first addressing datum (A) is adapted to locate the variable (Z) in the execution stack (P1),

• control storage, in the or each control stack (P2), of the integrity check data (X, Y) of the variable (Z),

• control storage, in a second index register (ind2), of a unique second addressing datum (A2) adapted to locate the integrity check data (X, Y) in the or each control stack (P2, P3).

• control the integrity check of the variable (Z) performed when a program commands reading of the addressing datum (A) of the variable (Z) and/or reading of the value (V) of the variable (Z), said verification comprising comparison between the integrity check data stored in the or each control stack (P2, P3) and new integrity check data calculated on the basis of:

◦ a type (T, T') of the variable (Z) seen by the program during the reading command, and
◦ the value (V, V') of the variable (Z) present in the execution stack (P1) and/or of the addressing datum (A, A') present in the index register (ind1) during the reading command.

**FIG. 1a**

**FIG. 1b**

**FIG. 2**

**FIG. 3**

Mémorisation d'une donnée d'adressage A d'une variable Z dans un registre ind1 — 102

Mémorisation de la valeur V de la variable Z dans une pile d'exécution P1 — 104

Calcul de données de contrôle d'intégrité X, Y sur la variable Z — 106

Mémorisation des données de contrôle d'intégrité X, Y dans une pile de contrôle P2 — 108

Mémorisation d'une donnée d'adressage A2 des données d'intégrité dans une registre ind2 — 110

Vérification d'intégrité de la variable Z à partir des données d'intégrité — 112

**FIG. 4**

ind1

ind2

A

A2

← AP1

← AP3

← AP2

P1

P3

P2

V

V ou Y

X

← Z

m

m

n

**FIG. 5**

Mémorisation d'une donnée d'adressage A d'une variable Z dans un registre ind1 — 202

Mémorisation de la valeur V de la variable Z dans une pile d'exécution P1 — 204

Copie de la valeur V dans une pile de sauvegarde P3 — 206

Calcul d'une donnée de contrôle d'intégrité X sur le type de la variable Z — 208

Mémorisation de la donnés de contrôle d'intégrité X dans la pile de contrôle P2 — 210

Mémorisation d'une unique donnée d'adressage A2 de la copie et des données d'intégrité dans un registre ind2 — 212

Vérification d'intégrité de la variable Z à partir des données d'intégrité — 214

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1960934 B1